# EUROPEAN PATENT APPLICATION

(11) **EP 3 825 884 A1**
(43) Date of publication of application: **26.05.2021**
(21) Application number: 19211072.4
(22) Date of filing: 22.11.2019
(51) Int. Cl.: G06F 21/55, G06F 21/56, H04L 29/06

(54) **COMPUTER-IMPLEMENTED METHOD OF DETERMINING SYSTEM ACCESS OPERATION RISK ON A MOBILE DEVICE**

(71) Applicant: Traced Ltd., Waltham St. Lawrence, Berkshire RG10 0JP (GB)
(72) Inventor: JONES, Benedict, Oxford. OX4 3BW (GB); BODDY, Matthew, Oxford. OX4 1YZ (GB)
(74) Representative: Cross, James Peter Archibald

(57) **Abstract**

A risk rating of a system access operation event is calculated by means of real-time system access operation monitoring and contextual system state analysis based upon a computational classification model on a mobile device. The risk rating may be based on a rating for the operation event itself, which may be modified according to a risk rating for an app deduced as being associated with the operation event and/or a risk rating for the mobile device. The context may be based on contextual system state information provided to a risk rating calculation thread or method which may be spawned from a system listener service that captures the contextual system state information in real time when a system access operation occurs. Responsive actions may be enabled on the basis of the risk rating.

## Description

### Field of the Invention

This disclosure relates generally to mobile device security, more specifically for identifying a risk of system access operations on a mobile device.

### Background of the Invention

Mobile devices (e.g. running Android (RTM) or iOS (RTM) mobile operating systems) are exploitable, enabling persistent footholds onto these devices for malicious actors via the installation of apps. These apps (often referred to generally as "malware") can use the mobile device functions for the benefit of malicious actors. This has been achieved in the past by some or all of: listening in to conversations via the microphone, recording the camera and blackmailing the user, recording the screen to steal passwords and other personal information from the device, recording calls to listen in on conversations and using location information to track a user's whereabouts.

Apps that exhibit malicious or otherwise considerably unwanted behaviour can come from anywhere, even trusted software marketplaces. As a direct result of recent advancements and increase in quantity of mobile malware, businesses and consumers alike are facing financial implications following these security breaches. The shift towards an increasing amount of corporate data residing on organisations' mobile devices has resulted in 67 % of organisations having suffered a data breach due to their mobile devices. This problem is only predicted to worsen with 1/3 of all malware expected to be mobile in 2019.

There is therefore an ever-increasing need to protect against mobile malware and mobile app permission abuse.

### Statements of the Invention

In one aspect of the invention, there is provided a computerised method for calculating a risk rating of system access operation events by means of real-time system access operation monitoring and contextual system state analysis on a mobile device. The method includes calculating a system access operation event risk rating based upon a computational classification model to deduce the context of a system access operation. Responsive actions may be enabled on the basis of the risk rating. Responsive actions may be enabled on the basis of the risk rating.

The context may be based on contextual system state information comprising one or more of: time of system access operation, system access operation type, lock state of the device, interactivity state of the device (for example one or more of: whether the user is interacting with the device, the power state of the device (e.g. device idle, device charging, device dreaming, CPU idle, screen is on/off)), relevant foreground Information on apps that are running or have been running in the foreground, any apps associated with the system access operation and their relevant information, a list of all active network connections, the associated app to the process ID that holds the handle to each respective TCP Socket and its relevant information. The relevant information may include permissions, app name, version, developer, signing certificate information, app category and/or file hash and/or associative file hash, the files themselves and/or file system access operations (e.g. the APK installer or the constituent files themselves). The contextual state information may also include information on any other apps running on the mobile device, for example if it is not possible to identify or deduce the associated apps based on foreground or network activity.

The contextual system state information is provided to a risk rating calculation thread or method which may be spawned from or run within a system listener service that captures the contextual system state information in real time when a system access operation occurs. The system listener service may comprise one or more system access operation type listeners, the operations including for example camera, microphone, location, display state, phone state (e.g. calls) and/or app install events.

One or more apps responsible for and/or associated with the system access operation may be deduced based upon the contextual system state information passed from the system listener service. A risk rating of a deduced perpetrator app and/or accessory app associated with a system access operation event may be calculated based upon relevant information as defined above, relevant foreground information, network information (e.g. IP Address, Port, domain name etc.) and/or an average of calculated risk ratings spanning all system access operation events with which the perpetrator app and/or accessory app is associated.

The relevant foreground information obtained may include one or more of: the first, total and last time spent in the foreground, the total and last time the app was visible in the Ul, the total and last time the app's foreground service was used, additional usage statistics events and additional relevant information, such as permissions, app name, version, developer, signing certificate information, app category, file hash and/or associative file hashes and/or the files themselves, and/or file system access operations. The relevant foreground information may also be obtained for apps with network connections and/or any other apps installed on the system.

A device risk rating may be calculated based upon one or more factors including: OS type, OS version and consideration of other system-wide activity including frequency and risk rating of previous system access operation events, and app risk ratings for apps installed on the device.

The risk rating(s) may be normalized into a scale (e.g. %) to prioritize and act as a reference point for events.

The system access operation event context and associated application(s) from the computational classification model may have an associated certainty score based upon supervised and/or unsupervised data classification, analysis and correlation.

The supervised data classification may be achieved by prompting users or administrators to provide feedback on suspected uncertain deductions and their correct assumptions. For example, if the user or administrator suspects the deduced associated apps to be incorrect, they can modify this e.g. by identifying another associated app. In another example, the user or administrator may reclassify a risk rating for a system operation event and/or an app. In either example, or other examples, a manual override corresponding to the modification or reclassification is added into the associated system access operation event entry in the local database and/or a remote database.

The user may be alerted visually via a notification when a system access operation is active (e.g. if the microphone, camera, call recording or screen recording is active). In response to an alert of the risk rating, the local user may perform one or more responsive interactions (e.g. uninstall an app, revoke permissions or kill background processes) to system access operation type listeners locally on the device, or a remote administrator may perform responsive interactions and/or manage the configuration of the system via a remote, web-based console or via an MDM (mobile device management) API (application programming interface).

A combination of data from the risk ratings of the system access operation events, the deduced apps associated with the system access operation events, the system access operation events themselves and/or contextual system state analysis may be used to identify correlations in behaviour of applications that are behaving in an unauthorized manner (e.g. malicious or suspicious intent).

A plurality of concurrently active system access operation type listener triggers can be combined to identify additional system access operation types (e.g. Phone State (Call) + Microphone = Call recording).

The risk ratings and associated information may be stored in a local database on the device and a background data transfer service running locally on the computerised mobile device may authenticate with a remote API gateway and periodically synchronize the data across a network via an encrypted session into a centralised database/indexing engine for correlation. The information transferred from the device may be anonymized before transfer by the background data transfer service.

Other aspects of the invention include a (non-transient) computer program product arranged to perform the method of the invention when installed on a mobile device.

### Brief Description of the Drawings

Specific embodiments of the present invention will now be described with reference to the accompanying drawings, in which:
Figure 1 is a schematic showing the system and interaction between subsystems on a mobile device in an embodiment of the invention;
Figure 2 is an exemplary flow diagram illustrating the steps of a computational classification model for initial risk rating based on display state system access operation event in the embodiment;
Figure 3 is an exemplary flow diagram illustrating the steps of the computational classification model for initial risk rating based on location system access operation event;
Figure 4 is an exemplary flow diagram illustrating the steps of the computational classification model for initial risk rating based on camera system access operation event;
Figure 5 is an exemplary flow diagram illustrating the steps of the computational classification model for initial risk rating based on microphone system access operation event;
Figure 6 is an exemplary flow diagram illustrating the steps of the computational classification model for initial risk rating based on app install system access operation event;
Figure 7 is an exemplary flow diagram illustrating the steps of the computational classification model for initial risk rating based on call recording system access operation event;
Figure 8 is an exemplary flow diagram illustrating the steps of the computational classification model for initial risk rating based on phone state change (call) system access operation event;
Figure 9 is a diagram of the background data transfer service architecture in the embodiment;
Figures 10-13 are examples of screenshots from an app on the mobile device in an embodiment of the invention, showing respectively:

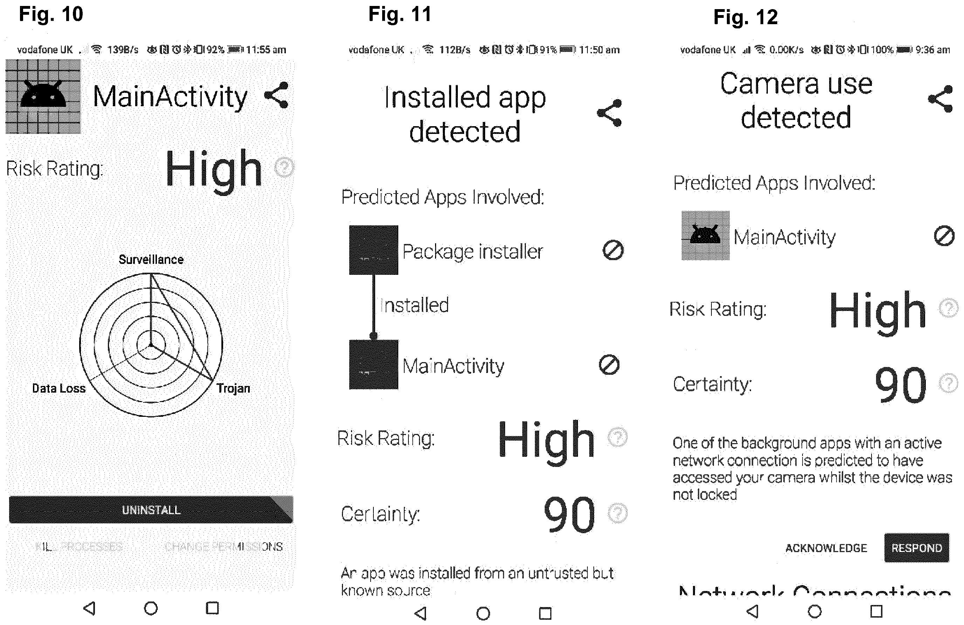

   Figure 10: app analysis
   Figure 11: app install detection analysis
   Figure 12: camera use detection analysis; and

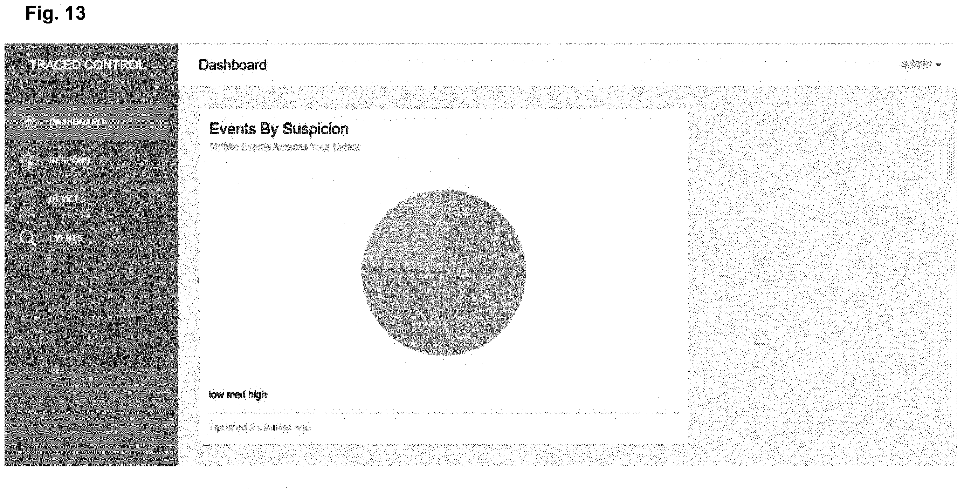

   Figure 13 is an example of a screenshot from web-based EDR platform in an embodiment of the invention.

### Description of Specific Embodiments

### System Overview

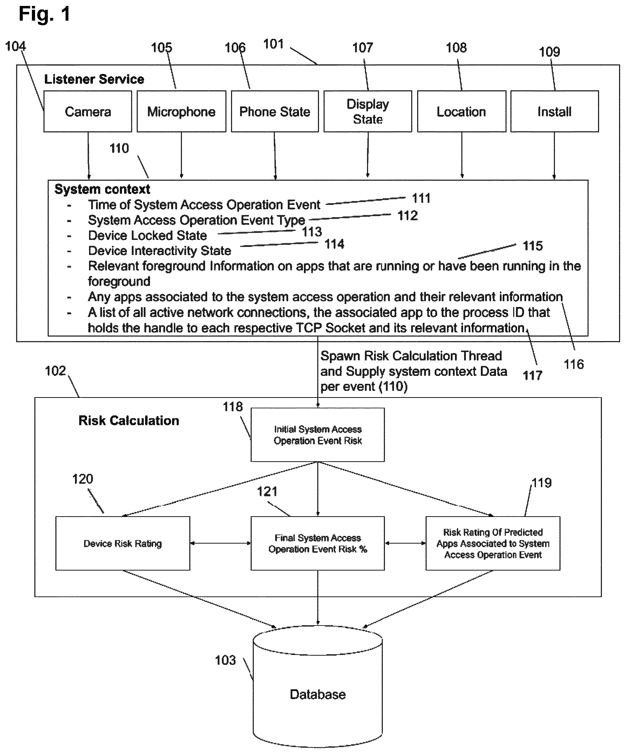

Figure 1 is a schematic diagram showing the system and interaction between subsystems on a mobile device to achieve the computer-implemented method of an embodiment of the invention.

The mobile device itself may be of a conventional type, comprising for example a processor, memory, a display, an input device e.g. a keyboard or touchscreen, a camera, microphone, navigation signal (e.g. GPS) receiver and/or one or more wireless interfaces (e.g. 3G/4G/5G mobile, Bluetooth (RTM) NFC and/or WiFi (RTM)). The mobile device may be a portable computing device such as a smartphone, personal digital assistant, wearable device (e.g. smart watch), tablet or single board computer device such as an loT (Internet of Things) device. The mobile device may run a mobile OS, such as iOS (RTM), Android (RTM) or an embedded OS such as Android Things. One or more mobile application programs or 'apps' may be installed, typically from a digital distribution platform such as the App Store for iOS (RTM) or Play Store for Android (RTM) and run on the mobile device, within the mobile OS. On or more services may also be run within the mobile OS.

The subsystems in this embodiment comprise system access operation event listener service 101, risk calculation thread 102 and a local database 103. The system access operation event listener service 101 is a background service that comprises a plurality of system access operation listeners to trigger an event in real-time when a system access operation occurs; for example, by using native library calls such as: broadcast receivers, callbacks and listeners.

The plurality of system access operation listeners may comprise at least some of the following system access operation event types 112:
- camera system access operation listener 104
- microphone system access operation listener 105
- phone state system access operation listener 106
- display state system access operation listener 107
- location system access operation listener 108
- install event system access operation listener 109

Once any of the said system access operation listeners are triggered, the listener service obtains a snapshot of the contextual system state information 110 at the time of the triggered event. The contextual system state information 110 may comprise one or more of:
- Time of System access operation Event 111
- System access operation Event Type 112
- Device Locked State 113
- Device Interactivity State 114, for example one or more of: whether the user is interacting with the device, the power state of the device (e.g. device idle, device charging, device dreaming, CPU idle, screen is on/off)
- Relevant foreground Information on apps that are running or have been running in the foreground 115
- Any apps associated with the system access operation and their relevant information 116
- A list of all active network connections, the associated app to the process ID that holds the handle to each respective TCP Socket and its relevant information 117

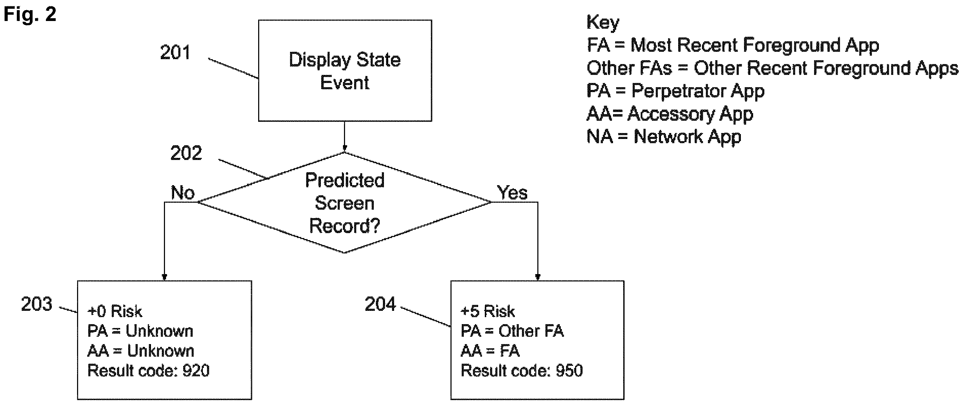

For each of the events triggered by one of the system access operation listeners, the contextual system state information 110 is obtained and a risk calculation thread 102 is spawned. The risk calculation thread 102 is passed all of the contextual system state information 110 obtained for the respective system access operation events. The risk calculation thread 102 then accesses a computational classification model to deduce the context, associated apps and calculate an initial risk rating 118 to the system access operation event. Exemplary flow diagrams illustrating the steps of an embodiment of the computational classification model for initial risk rating 118 based on system access operation event type are represented in Figures 2-8.

Once the initial risk rating 118 is calculated, a risk rating of apps associated with the system access operation event 119 and a device risk rating 120 are then considered, to calculate a final risk rating 121. The risk rating of apps associated with system access operation event 119 is calculated/re-calculated in the risk calculation thread 102 and may be based on a plurality of variables including: an average of all system access operation event initial risk ratings to which each app is associated, their permissions, app name, version, developer, signing certificate information, app category and file hash (and/or associative file hash(es) and/or the files themselves and/or file system access operations). Once the risk rating of deduced apps associated with system access operation event 119 is calculated/recalculated, it is inserted/updated into the local database 103.

The device risk rating 120 is calculated in the risk calculation thread 102 and may be based on one or more variables including: OS, OS version and/or other system-wide activity including frequency and risk rating of previous system access operation events and app risk ratings for apps installed on the device. Once the device risk rating 120 is calculated/recalculated, it is inserted/updated into the local database 103

Finally, once the final risk rating 121 for a specific system access operation event is calculated, it is inserted into the local database 103 along with the contextual system state information 110, and the respective risk calculation thread 102 is killed.

In an alternative embodiment, the risk calculation method may be performed in the same thread or process as the system listener.

### Computational Classification Model Examples

In the examples shown in Figures 2-8, the term "perpetrator app" refers to the app deduced, determined or predicted to be responsible for the system access operation that triggered the system access operation event listener. This determination or deduction may be based upon the apps' relevant information e.g. permissions, foreground information, network connection information, SHA 256, app category, name, signing cert, version etc.

The term "accessory app" refers to any additional apps determined relevant to the system access operation event.

Where it is not possible to identify the perpetrator app and/or accessory apps by the above techniques (e.g. PA=Unknown or AA=Unknown in Figures 2-8), the method may include checking the UID, package name, version or file hash and/or associative file hash(es) and/or the files themselves and/or file system access operations of all apps installed or running system-wide to confirm if they are running in the background and if so, deducing the perpetrator app and/or accessory app(s) based upon the running apps' relevant information (e.g. permissions, SHA 256, app category, name, signing cert, version etc.).

The exemplary computational classification model in one embodiment is a decision tree in which a system access operation event of a specific type is triggered. The computational classification model uses a series of nested logic operators to predict the context of a display attachment and assign an appropriate initial risk rating 118. Dependent upon the path through the decision tree, an appropriate result code and risk rating is assigned to each system access operation event, using for example the result code lookup table of Figure 10.

Figure 2 is an exemplary flow diagram illustrating the steps of an embodiment of the computational classification model for initial risk rating based on a display state system access operation event. In this context the system access operation may be recording the screen. The accessory app refers to any additional relevant apps to the system access operation event e.g. the app that was in the foreground when screen recording occurred.

The result of logic operator 202 is dependent upon the foreground apps, their last time in the foreground as passed by the system listener service 101.

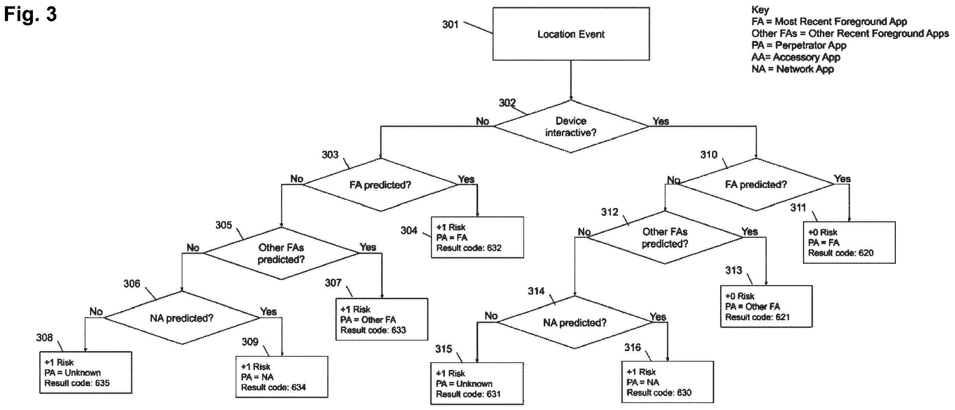

Figure 3 is an exemplary flow diagram illustrating the steps of an embodiment of the computational classification model for initial risk rating based on a location system access operation event. In this context the system access operation event may be access to location information.

The result of logic operator 302 is dependent upon the device interactivity state determined by a user's interactivity with the device as passed by the system listener service 101.

The result of logic operator 303 is dependent upon whether the most recent app to be in the foreground, as passed by the system listener service 101 for the respective system access operation event, is deduced to be responsible for this operation.

The result of logic operator 305 is dependent upon whether the other most recent apps to be in the foreground, as passed by the system listener service 101 for the respective system access operation event, are deduced to be responsible for this operation.

The result of logic operator 306 is dependent upon whether any of the apps with active network connections, as passed by the system listener service 101 for the respective system access operation event, are deduced to be responsible for this operation.

The result of logic operator 310 is dependent upon whether the most recent app to be in the foreground, as passed by the system listener service 101 for the respective system access operation event, is deduced to be responsible for this operation.

The result of logic operator 312 is dependent upon whether the other most recent apps to be in the foreground, as passed by the system listener service 101 for the respective system access operation event, are deduced to be responsible for this operation.

The result of logic operator 314 is dependent upon whether any of the apps with active network connections, as passed by the system listener service 101 for the respective system access operation event, are deduced to be responsible for this operation.

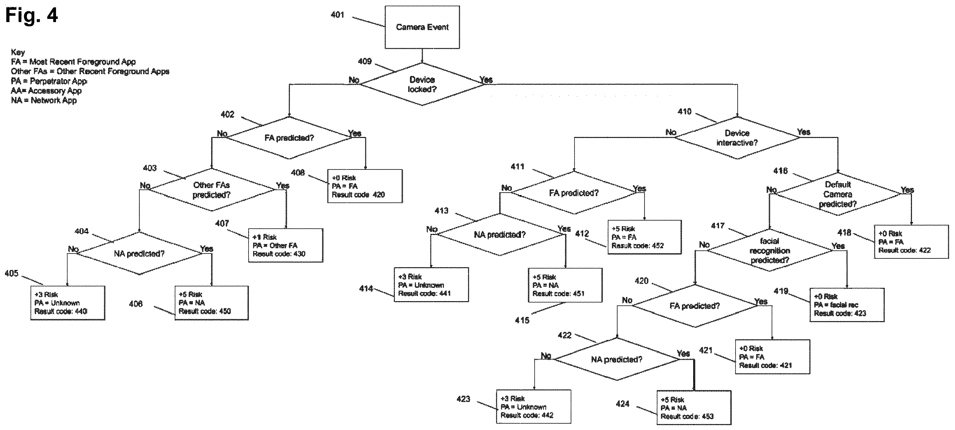

Figure 4 is an exemplary flow diagram illustrating the steps of an embodiment of the computational classification model for initial risk rating based on a camera system access operation event. In this context the system access operation may be access to the camera.

The result of logic operator 409 is dependent upon the device locked state as passed by the system listener service 101 for the respective system access operation event.

The result of logic operator 402 is dependent upon whether the most recent app to be in the foreground, as passed by the system listener service 101 for the respective system access operation event, is deduced to be responsible for this operation.

The result of logic operator 403 is dependent upon whether the other most recent apps to be in the foreground, as passed by the system listener service 101 for the respective system access operation event, are deduced to be responsible for this operation.

The result of logic operator 404 is dependent upon whether any of the apps with active network connections, as passed by the system listener service 101 for the respective system access operation event, are deduced to be responsible for this operation.

The result of logic operator 410 is dependent upon the device interactivity state e.g. is the screen on as passed by the system listener service 101 for the respective system access operation event.

The result of logic operator 411 is dependent upon whether the most recent app to be in the foreground, as passed by the system listener service 101 for the respective system access operation event, is deduced to be responsible for this operation.

The result of logic operator 413 is dependent upon whether any of the apps with active network connections, as passed by the system listener service 101 for the respective system access operation event, are deduced to be responsible for this operation.

The result of logic operator 416 is dependent upon whether the most recent app to be in the foreground is the default camera app for the operating system, as passed by the system listener service 101 for the respective system access operation event, and is deduced to be responsible for this operation.

The result of logic operator 417 is dependent upon whether the system access operation is deduced to have been triggered by the "face unlock" feature on the device. The deduction is based upon the contextual system state information 110 e.g. is the device locked and interactive and have there been other recent state changes?

The result of logic operator 420 is dependent upon whether the most recent app to be in the foreground, as passed by the system listener service 101 for the respective system access operation event, is deduced to be responsible for this operation.

The result of logic operator 422 is dependent upon whether any of the apps with active network connections, as passed by the system listener service 101 for the respective system access operation event, are deduced to be responsible for this operation.

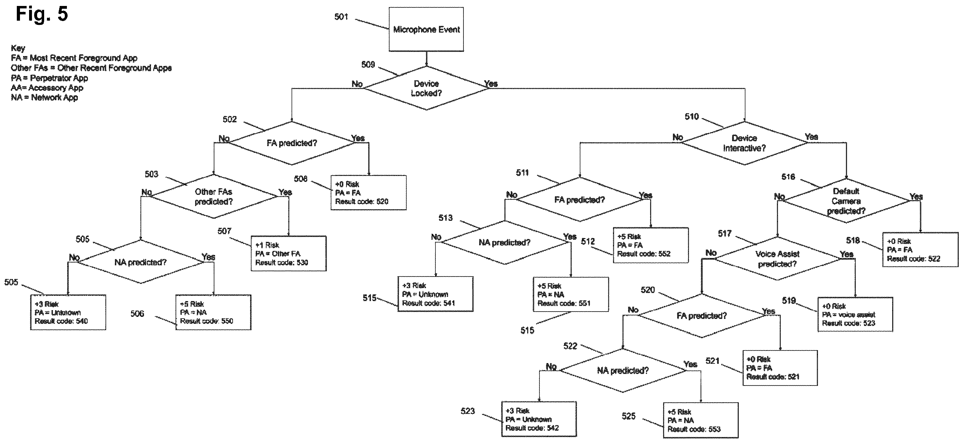

Figure 5 is an exemplary flow diagram illustrating the steps of an embodiment of the computational classification model for initial risk rating based on a microphone system access operation event. In this context the system access operation may be access to the microphone.

The result of logic operator 509 is dependent upon the device locked state as passed by the system listener service 101 for the respective system access operation event.

The result of logic operator 502 is dependent upon whether the most recent app to be in the foreground, as passed by the system listener service 101 for the respective system access operation event, is deduced to be responsible for this operation.

The result of logic operator 503 is dependent upon whether the other most recent apps to be in the foreground, as passed by the system listener service 101 for the respective system access operation event, are deduced to be responsible for this operation.

The result of logic operator 505 is dependent upon whether any of the apps with active network connections, as passed by the system listener service 101 for the respective system access operation event, are deduced to be responsible for this operation.

The result of logic operator 510 is dependent upon the device interactivity state determined by a user's interactivity with the device as passed by the system listener service 101.

The result of logic operator 511 is dependent upon whether the most recent app to be in the foreground, as passed by the system listener service 101 for the respective system access operation event, is deduced to be responsible for this operation.

The result of logic operator 513 is dependent upon whether any of the apps with active network connections, as passed by the system listener service 101 for the respective system access operation event, are deduced to be responsible for this operation.

The result of logic operator 516 is dependent upon whether the most recent app to be in the foreground is the default camera app for the OS, as passed by the system listener service 101 for the respective system access operation event, and is deduced to be responsible for this operation.

The result of logic operator 517 is dependent upon whether the most recent app to be in the foreground is the voice assist app for the OS, as passed by the system listener service 101 for the respective system access operation event, and is deduced to be responsible for this operation. The deduction is based upon the system's voice assist settings relevant information e.g. is the voice assistant enabled?

The result of logic operator 520 is dependent upon whether the most recent app to be in the foreground, as passed by the system listener service 101 for the respective system access operation event, is deduced to be responsible for this operation.

The result of logic operator 522 is dependent upon whether any of the apps with active network connections, as passed by the system listener service 101 for the respective system access operation event, are deduced to be responsible for this operation.

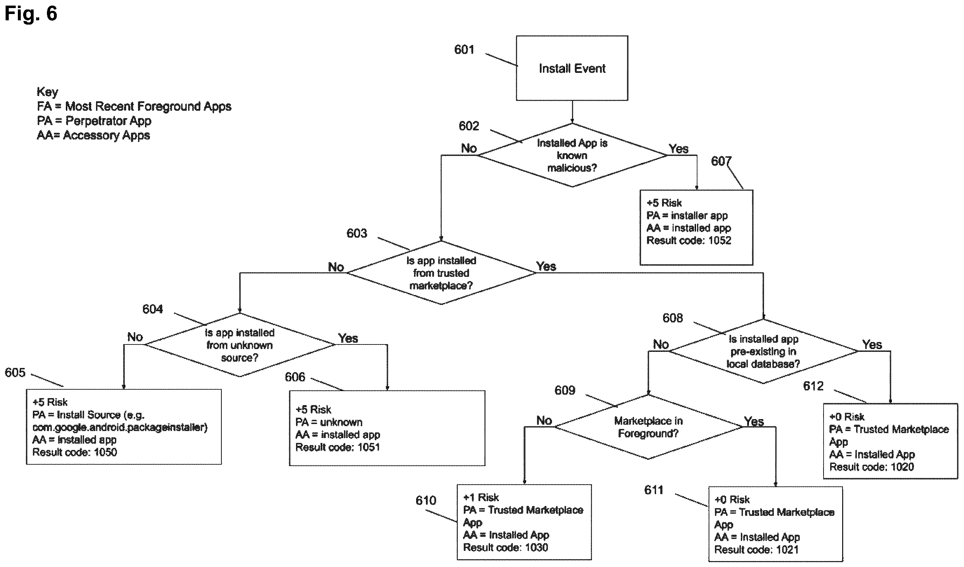

Figure 6 is an exemplary flow diagram illustrating the steps of an embodiment of the computational classification model for initial risk rating based on app install system access operation event. In this context the perpetrator app may be the app that installed another app. The accessory app refers to any additional relevant apps to the system access operation event e.g. the app that was installed by the perpetrator app.

The result of logic operator 602 is variant based upon the app's relevant information e.g. file hash (and/or associative file hash(es) and/or the files themselves and/or file system access operations), app name, app category, signing cert, version etc. as passed by the listener service 101.

The result of logic operator 603 is a variant based upon whether the marketplace app, as passed by the system listener service 101 for the respective app install event, is one which is deemed to be trusted e.g. Google play store/Apple app store.

The result of logic operator 604 is a variant based upon whether the marketplace app, as passed by the system listener service 101 for the respective app install event, is unknown.

The result of logic operator 608 is a variant based upon whether the installed app, as passed by the system listener service 101 for the respective app install event, is one which information is already known in the local database 103.

The result of logic operator 609 is dependent upon whether one of the most recent app to be in the foreground, as passed by the system listener service 101 for the respective system access operation event, are deduced to be responsible for this operation.

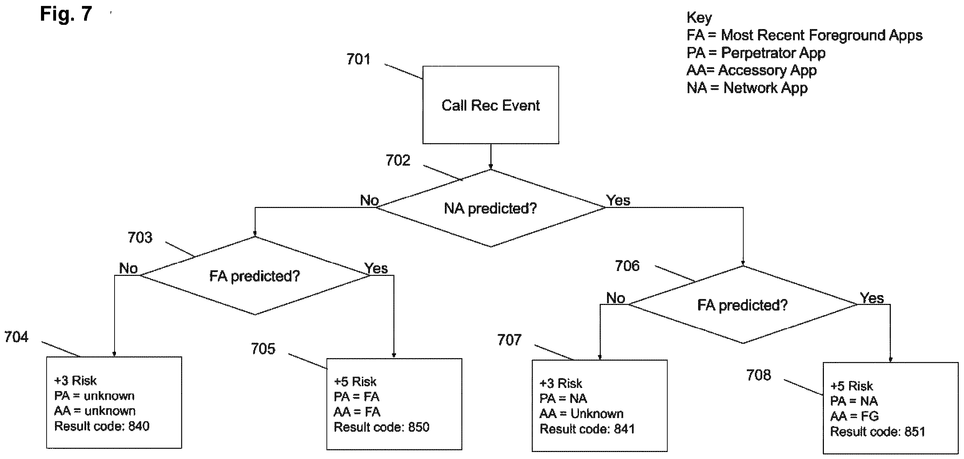

Figure 7 is an exemplary flow diagram illustrating the steps of an embodiment of the computational classification model for initial risk rating based on call recording system access operation event. In this context the perpetrator app may be the app that is suspected of recording a phone call. The accessory app refers to any additional relevant apps to the system access operation event e.g. the app that made a phone call which was suspected to have been recorded.

The result of logic operator 702 is dependent upon whether any of the apps with active network connections, as passed by the system listener service 101 for the respective system access operation event, are deduced to be responsible for this operation.

The result of logic operator 703 is dependent upon whether the most recent app to be in the foreground, as passed by the system listener service 101 for the respective system access operation event, is deduced to be responsible for this operation.

The result of logic operator 706 is dependent upon whether the most recent app to be in the foreground, as passed by the system listener service 101 for the respective system access operation event, is deduced to be responsible for this operation.

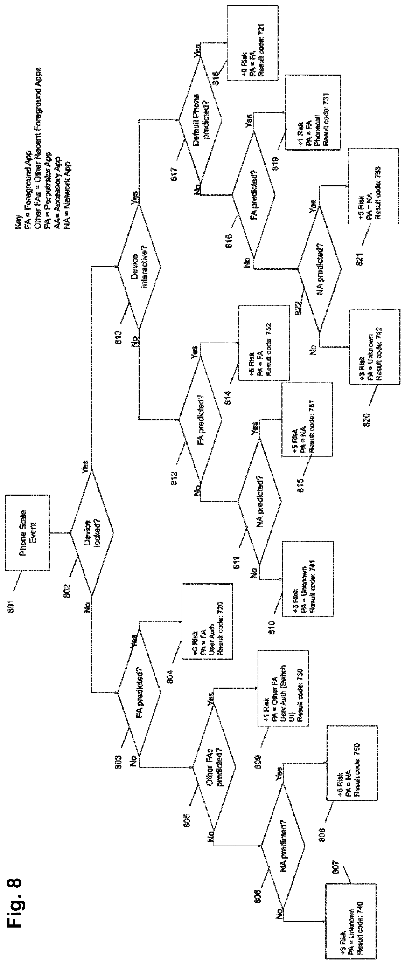

Figure 8 is an exemplary flow diagram illustrating the steps of an embodiment of the computational classification model for initial risk rating based on a phone state change call system access operation event. In this context the perpetrator app may be the app deduced or suspected to have made a phone call.

The result of logic operator 802 is dependent upon the device locked state as passed by the system listener service 101 for the respective system access operation event.

The result of logic operator 803 is dependent upon whether the most recent app to be in the foreground, as passed by the system listener service 101 for the respective system access operation event, is deduced to be responsible for this operation.

The result of logic operator 805 is dependent upon whether the other most recent apps to be in the foreground, as passed by the system listener service 101 for the respective system access operation event, are deduced to be responsible for this operation.

The result of logic operator 806 is dependent upon whether any of the apps with active network connections, as passed by the system listener service 101 for the respective system access operation event, are deduced to be responsible for this operation.

The result of logic operator 813 is dependent upon the device interactivity state determined by a user's interactivity with the device as passed by the system listener service 101.

The result of logic operator 812 is dependent upon whether the most recent app to be in the foreground, as passed by the system listener service 101 for the respective system access operation event, is deduced to be responsible for this operation.

The result of logic operator 811 is dependent upon whether any of the apps with active network connections, as passed by the system listener service 101 for the respective system access operation event, are deduced to be responsible for this operation.

The result of logic operator 817 is dependent upon whether the most recent app to be in the foreground is the default phone app for the OS, as passed by the system listener service 101 for the respective system access operation event, and is deduced to be responsible for this operation.

The result of logic operator 816 is dependent upon whether the most recent app to be in the foreground, as passed by the system listener service 101 for the respective system access operation event, is deduced to be responsible for this operation.

The result of logic operator 822 is dependent upon whether any of the apps with active network connections, as passed by the system listener service 101 for the respective system access operation event, are deduced to be responsible for this operation.

In the above embodiments, the computational model is a decision tree. Alternative models may be used, such as a machine learning model.

### Background Data Transfer

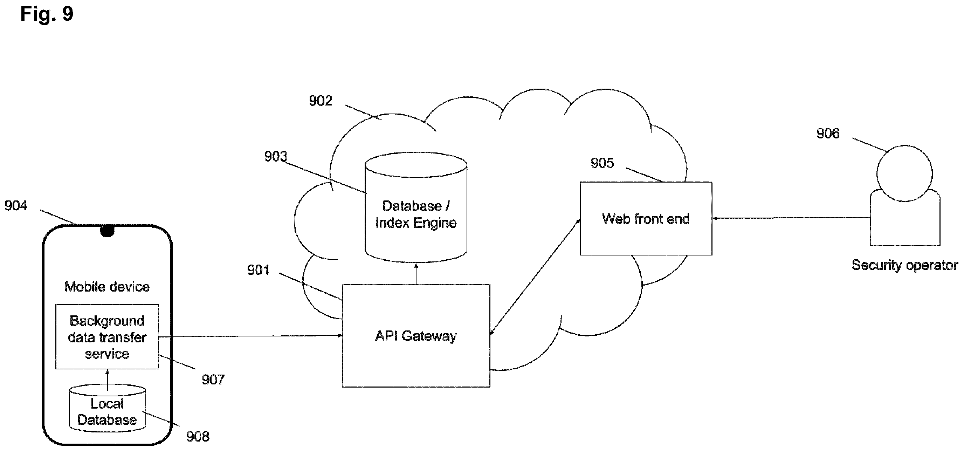

Figure 9 is a diagram of the background data transfer service architecture in an embodiment of the invention, wherein data from local database 908 is periodically synchronized across a network by a background data transfer service 907 running locally on the mobile device (904). The background data transfer service 907 running locally on the mobile device 904 will initially authenticate across a network with an API gateway 901 (e.g. via OAuth 2, JWT or API Key). Upon successful authentication, the background data transfer service 907 running locally on the computerised mobile device 904 will then transfer the data across a network (e.g. in JSON over HTTPS) via an encrypted session (e.g. TLS) into a centralised database/indexing engine for correlation. The information transferred from the device may also be anonymized before transfer by the background data transfer service 907.

The web front end 905 (e.g. Apache) is organically developed using HTML, CSS & JS and the back-end uses PHP (and possibly Node.js) to communicate with Elasticsearch 903 PHP API via Authentication through OpenDistro 901. The combination of OpenDistro 901, Elasticsearch 903 and web front end 905 comprise an EDR Platform, as shown for example in Figure 13, that can be deployed commercially. Instance of these components may be used in order to collate and further analyse anonymized data, which may be anonymised or not, from end users of the technology.

### User Interface

A user interface (Ul) for accessing the system of the embodiment may be provided via a UI app. System access operation events are accessible and may be represented graphically via the UI app, in a graphical user interface (GUI). The highest risk events and/or apps (for example events with a risk rating equal to a threshold, such as 3 or 5) may be prioritised and brought to the user's attention via the GUI. These higher risk events may for example be brought to the user's attention via either or both of two methods: first, a notification pops up on the occurrence of a particularly high-risk event or high-risk app. By clicking into this notification, the user is brought to the detection analysis view for an event and an app analysis view for an app where they can respond to this high-risk activity. Secondly, the highest risk events and apps may be displayed upon opening the UI app allowing the user to drill down further into either an analysis of the app or information on the system access operation event in the detection analysis view.

When a user chooses to drill down into an event by going onto the detection analysis view, they are presented with information about the event, as shown for example in Figure 11 for an app install event and in Figure 12 for a camera use event. The identification of any apps suspected or deduced to be directly associated with the event is displayed, preferably along with a reason as to why this conclusion has been drawn. The user is presented with a risk rating and preferably the certainty of this deduction. If the user considers any of the deductions made in association to the respective system access operation event to be incorrect, they can reclassify the risk locally on the mobile device. If the user considers the app deduction wrong, they may look through a list of other potential apps and choose to manually override this deduction for improved accuracy. However, if the user thinks that the information in the system access operation event is accurate, they may immediately take responsive action (e.g. revoke permissions or uninstall associated apps).

When the user goes into the app analysis view, as shown for example in Figure 10, they may see the previous system access operation events to which the app was deduced to be associated, risk rating of the app, any app information accessible, and are given the ability to respond to the app by uninstalling or revoking permissions.

Via the GUI, the user can also directly share information on a system access operation event or on an app to social media (e.g. share directly to Linkedln (RTM), Twitter (RTM), Instagram (RTM), or Facebook (RTM), or generate a report). A user can also search for any app installed or previously installed on their device, which will take them directly to the app analysis view for the respective app.

Embodiments of the invention can be deployed in a commercial context (e.g. Enterprise Mode) whereby the app is enrolled to a single EDR Platform (901 + 903 +905) and uses OAuth2, JWT or API Tokens to authenticate. In this deployment mode, the app GUI will be changed accordingly (e.g. may not prompt the end user to check status) and may be used to display push notifications to the end user.

Alternatively or additionally to providing the above information on system access operation events to the user and awaiting a response from the user, a response may be generated automatically, based for example on one or more predefined policies; for example revoke permissions from or uninstall the perpetrator app for a system access operation event having a risk rating of 5.

### Deployment Examples

Embodiments of the invention may comprise a computer program, program code and/or a computer program product, which may for example be deployed in one or more of the following considered scenarios:
1. As a standalone Mobile Threat Defence/EDR Agent app for consumers which may be deployed via installation from a digital distribution platform such as the App Store for iOS (RTM) or Play Store for Android (RTM) and run on the mobile device.
2. As an enrolled and centrally managed Mobile Threat Defence/EDR Agent app for licensed commercial use which may be deployed via installation from a digital distribution platform such as the App Store for iOS (RTM) or Play Store for Android (RTM) or via a Mobile Device Management (MDM) platform to a digital distribution platform or as a standalone app installer (e.g..APK or .ipa file) and run on the mobile device.
3. Integrated into a separate app (e.g. OEM to/from a third party) to coexist alongside other functionality.

### Risk Scoring Result Code Lookup Table

Table 1 below is an example of a risk scoring result code lookup table in an embodiment of the invention, for converting a result code as shown in Figures 2 to 8 into a risk rating.

| Event Type | Result Code | Risk Rating | Description (friendly name) |
|---|---|---|---|
| Cam | 420 | 0 | The foreground app is deduced to have accessed your camera whilst the device was not locked |
| | 421 | 0 | The foreground app is deduced to have accessed your camera whilst the device was locked and interactive |
| | 422 | 0 | The default camera app is deduced to have accessed your camera whilst the device was locked and interactive. This is likely to have been caused by taking a photo or video |
| | 423 | 0 | The facial unlock is deduced to have accessed your camera whilst the device was locked and interactive. |
| | 430 | 1 | One of the foreground apps is deduced to have accessed your camera whilst the device was not locked |
| | 440 | 3 | One of the background apps is deduced to have accessed your camera whilst the device was not locked |
| | 441 | 3 | One of the background apps is deduced to have accessed your camera whilst the device was locked but not interactive |
| | 442 | 3 | One of the background apps is deduced to have accessed your camera whilst the device was locked and interactive |
| | 450 | 5 | One of the background apps with an active network connection is deduced to have accessed your camera whilst the device was not locked |
| | 451 | 5 | One of the background apps with an active network connection is deduced to have accessed your camera whilst the device was locked but not interactive |
| | 452 | 5 | The foreground app is deduced to have accessed your camera whilst the device was locked but not interactive |
| | 453 | 5 | One of the background apps with an active network connection is deduced to have accessed your camera whilst the device was locked and interactive |
| Mic | 520 | 0 | The foreground app is deduced to have accessed your microphone whilst the device was not locked |
| | 521 | 0 | The foreground app is deduced to have accessed your microphone whilst the device was locked and interactive |
| | 522 | 0 | The default camera app is deduced to have accessed your microphone whilst the device was locked and interactive. This is likely to have been caused by taking a video |
| | 523 | 0 | The default voice assistant is deduced to have accessed your microphone whilst the device was locked and interactive. |
| | 530 | 1 | One of the foreground apps is deduced to have accessed your microphone whilst the device was not locked |
| | 540 | 3 | One of the background apps is deduced to have accessed your microphone whilst the device was not locked |
| | 541 | 3 | One of the background apps is deduced to have accessed your microphone whilst the device was locked but not interactive |
| | 542 | 3 | One of the background apps is deduced to have accessed your microphone whilst the device was locked and interactive |
| | 550 | 5 | One of the background apps with an active network connection is deduced to have accessed your microphone whilst the device was not locked |
| | 551 | 5 | One of the background apps with an active network connection is deduced to have accessed your microphone whilst the device was locked but not interactive |
| | 552 | 5 | The foreground app is deduced to have accessed your microphone whilst the device was locked but not interactive |
| | 553 | 5 | One of the background apps with an active network connection is deduced to have accessed your microphone whilst the device was locked and interactive |
| Loc | 620 | 0 | The foreground app is deduced to have accessed your location whilst the device was not interactive |
| | 621 | 0 | One of the foreground apps is deduced to have accessed your location whilst the device was not interactive |
| | 630 | 1 | One of the background apps with an active network connection is deduced to have accessed your location whilst the device was not interactive |
| | 631 | 1 | One of the background apps is deduced to have accessed your location whilst the device was not interactive |
| | 632 | 1 | The foreground app is deduced to have accessed your location whilst the device was interactive |
| | 633 | 1 | One of the foreground apps is deduced to have accessed your location whilst the device was interactive |
| | 634 | 1 | One of the background apps with an active network connection is deduced to have accessed your location whilst the device was interactive |
| | 635 | 1 | One of the background apps is deduced to have accessed your location whilst the device was interactive |
| Call | 720 | 0 | The foreground app is deduced to have made a phone call whilst the device was not locked |
| | 721 | 0 | The default phone app is deduced to have made a phone call whilst the device was locked and interactive |
| | 730 | 1 | One of the foreground apps is deduced to have made a phone call whilst the device was not locked |
| | 731 | 1 | One of the foreground apps is deduced to have made a phone call whilst the device was locked and interactive |
| | 740 | 3 | One of the background apps is deduced to have made a phone call whilst the device was not locked |
| | 741 | 3 | One of the background apps is deduced to have made a phone call whilst the device was locked but not interactive |
| | 742 | 3 | One of the background apps is deduced to have made a phone call whilst the device was locked and interactive |
| | 750 | 5 | One of the background apps with an active network connection is deduced to have made a phone call whilst the device not locked |
| | 751 | 5 | One of the background apps with an active network connection is deduced to have made a phone call whilst the device was locked but not interactive |
| | 752 | 5 | One of the foreground apps is deduced to have made a phone call whilst the device was locked and not interactive |
| | 753 | 5 | One of the background apps with an active network connection is deduced to have made a phone call whilst the device was locked and interactive |
| Call Rec | 840 | 3 | One of the background apps is deduced to have recorded and made your phone call |
| | 841 | 3 | One of the background apps with an active network connection is deduced to have recorded your phone call and one of the background apps is deduced to have made the phone call |
| | 850 | 5 | One of the foreground apps is deduced to have recorded and made your phone call |
| | 851 | 5 | One of the background apps with a network connection is deduced to have recorded your phone call and one of the foreground apps with is deduced to have made the phone call |
| Screen Rec | 920 | 5 | Screen recording deduced |
| | 921 | 0 | Display state change detected, not deduced to be screen recording |
| Install | 1020 | 0 | A pre-existing app was installed from a trusted source but the source was not in the foreground. This is likely due to the app being upgraded or reinstalled |
| | 1021 | 0 | A new app was installed from a trusted source but the source was not in the foreground |
| | 1030 | 1 | A new app was installed from a trusted source but the source was not in the foreground |
| | 1050 | 5 | An app was installed from an untrusted but known source |
| | 1051 | 5 | An app was installed from an untrusted and unknown source |
| | 1052 | 5 | An app which is known to be malicious has been installed |

## Claims

1. A computer-implemented method of calculating an event risk rating associated with a system access operation on a mobile device, the method comprising:
a) identifying a system access operation event by means of a system listener service;
b) capturing contextual system state information associated with the system access operation event; and
c) calculating the event risk rating based upon a computational classification model.

2. The method of claim 1, wherein the system listener service is responsive to the system access operation event to capture the contextual system state information.

3. The method of claim 2, wherein the system listener service comprises one or more system access operation type listeners, which preferably include one or more of: camera, microphone, location, display state, phone state and app install event listeners.

4. The method of claim 3, wherein a system access operation event is identified or triggered from one or more concurrently active ones of said listeners.

5. The method of any preceding claim, wherein the system listener service spawns a risk rating calculation thread or method and provides the captured contextual system state information to the risk rating calculation thread or method.

6. The method of any preceding claim, wherein the contextual system state information comprises one or more of: time of system access operation, system access operation type, lock state of the mobile device, interactivity state(s) of the mobile device (for example one or more of: whether the user is interacting with the device, the power state of the device (e.g. device idle, device charging, device dreaming, CPU idle, screen is on/off), relevant foreground Information on apps that are running or have been running in the foreground, apps associated with the system access operation, one or more active network connections thereof and/or any apps installed on the system and/or one or more active network connections thereof.

7. The method of any preceding claim, further including identifying or deducing a perpetrator mobile application that initiated the system access operation, and/or one or more accessory mobile applications that are associated with the system access operation event, wherein the perpetrator or accessory applications are preferably identified or deduced from the contextual system state information or from mobile applications installed on the mobile device and/or the system configuration of the mobile device.

8. The method of claim 7, further including calculating an associated certainty score for the identified or deduced mobile application or applications, wherein the score may be based on supervised and/or unsupervised data classification, analysis and correlation, and wherein the supervised data classification may be performed by prompting a user to provide feedback on suspected uncertain identification of said mobile application or applications.

9. The method of claims 7 or claim 8, wherein an app risk rating of the perpetrator or accessory application is calculated based at least in part on a plurality of event risk ratings with which the perpetrator or accessory application is associated, and wherein the app risk rating may additionally be calculated based on: foreground information relating to the perpetrator or accessory application being in the foreground; permissions, app name, version, developer, signing certificate information, app category and/or file hash and/or associative file hash(es) and/or the files themselves; and/or network connections (e.g. IP Address, Domain Name, Port etc.)and/or file-system access operations with which the application is or has been associated.

10. The method of claim 9, wherein said foreground Information includes one or more of: the first, total and/or last time spent in the foreground, the total and last time the app was visible in the Ul, and the total and last time the application's foreground service was used.

11. The method of any preceding claim, wherein a device risk rating is calculated based at least in part upon frequency and/or event risk ratings of system access operation events or app risk ratings on the mobile device.

12. The method of any one of claims 9 to 11, wherein the event risk rating is an initial risk rating, the method further comprising calculating a final event risk rating based on the initial risk rating and the app risk rating and/or device risk rating.

13. The method of any preceding claim, including performing one or more actions on the mobile application or applications according to the risk rating or ratings; and/or alerting or providing the risk rating or ratings to a local or remote user via an interactive user interface.

14. The method of any preceding claim, wherein the risk rating or ratings are stored in a local database on the mobile device; wherein optionally the local database is synchronised with a remote database.

15. A computer program comprising program code arranged to perform the method of any preceding claim when executed on a mobile device.
